# EUROPEAN PATENT APPLICATION

(11) **EP 2 597 411 A1**
(43) Date of publication of application: **29.05.2013**
(21) Application number: 11809154.5
(22) Date of filing: 22.07.2011
(51) Int. Cl.: F28D 1/06, B01D 53/14, C10K 1/18, C10L 3/00

(54) **COOLER FOR FEED GAS OF LOW-TEMPERATURE METHANOL WASHING**

(30) Priority: 23.07.2010 CN 201020271669 U
(71) Applicant: Zhenhai Petrochemical Jianan Engineering Co., Ltd., Ningbo, Zhejiang 315207 (CN)
(72) Inventor: ZHANG, Xian'an, Zhejiang 315207 (CN); WANG, Jianliang, Zhejiang 315207 (CN); HU, Xianjun, Baotou, Inner Mongolia 014010 (CN); CHEN, Yongdong, Hefei, Anhui 230031 (CN)
(74) Representative: Decamps, Alain René François
(86) International application number: PCT/CN2011/001202
(87) International publication number: WO 2012/009965

(57) **Abstract**

The invention relates to a cooler for low-temperature methanol washing gas, which comprises a first heat exchanger (1) and a second heat exchanger (2). The first heat exchanger (1) comprises a first housing (11), a first board, and a first heat exchange tube (12). The first housing (11) is provided with a first feed gas inlet (g1), a first feed gas outlet (g2), a first heat transfer medium inlet, and a first heat transfer medium outlet. The second heat exchanger comprises a second housing (21), a second board, and a second heat exchange tube (22). The second housing (21) is provided with a second feed gas inlet, a second feed gas, a second heat transfer medium inlet, and a second heat transfer medium outlet. The second housing (21) and the second board of the second heat exchanger (2) may be made with a relatively thin plate, thereby enormously reducing the material and manufacturing cost for the invention with meeting the requirements of the production.

## Description

### Field of the Invention

The present invention relates to cooler, in particular to a cooler for low-temperature methanol washing gas.

### Description of the Prior Art

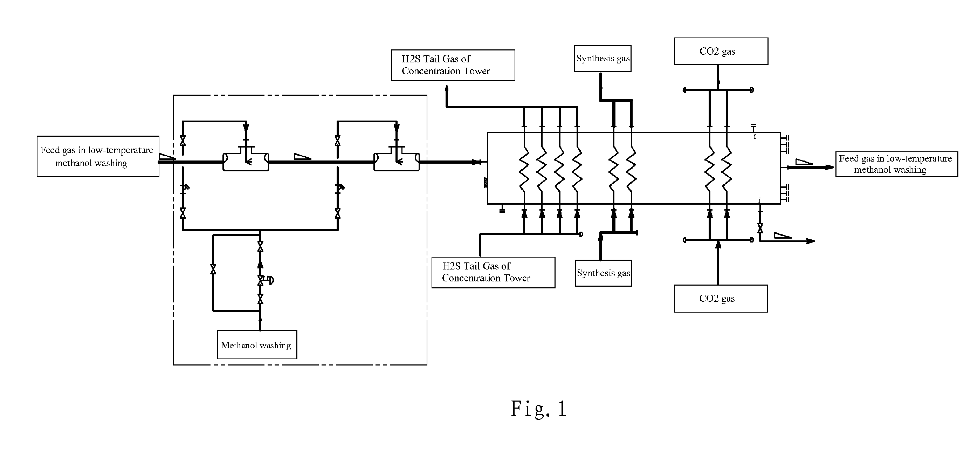

To satisfy the requirements of the next process, the low-temperature methanol washing gas should be cooled, which is usually achieved by a cooler. The present cooler comprises a heat exchanger, as shown in FIG.1, which includes a housing and a heat exchange tube located inside the housing and supported by a board. During the cooling progress, the feed gas flows through the housing while the heat transfer medium flows through the heat exchange tube. The housing is provided with a feed gas inlet and a feed gas outlet, a heat transfer medium inlet which communicates with one end of the first heat exchange tube, and a heat transfer medium outlet which communicates with the other end of the first heat exchange tube. A plurality of heat transfer medium require correspondingly a plurality of heat transfer medium inlets and heat transfer medium outlets, so as to enable the different heat transfer medium to flow in the corresponding heat exchange tubes. The heat transfer medium currently uses CO₂ gas (with a usual operating pressure of 0.19Mpa), H2S tail gas of concentration tower (with a usual operating pressure of 0.08Mpa) and synthesis gas (with a usual operating pressure of 5.0Mpa). The feed gas at 40°C and 5.5Mpa will enter the feed gas cooler on the housing side and be cooled to the temperature between -13°C and -20°C by the heat exchanger.

Though the heat exchanger can be used for cooling the feed gas in low-temperature methanol washing, the housing and the board of the heat exchanger are required to sustain relatively high pressure as the feed gas is a kind of high pressure medium. That is, it's necessary to shape the housing of the heat exchanger into a high-pressure-resistant container with thick walls and use thick boards as the board of the heat exchanger. Obviously, a cooler in such structure will increase the manufacturing cost of the cooler, and it will lead to high investment cost.

### Summary of the Invention

It is an object of the present invention to provide a cooler for low-temperature methanol washing gas with low cost.

For achieving the above stated object, a cooler for low-temperature methanol washing gas is disclosed, comprising: a heat exchanger, which comprises a first heat exchanger, and a second heat exchanger, wherein the first heat exchanger comprises a first housing, a first board, and a first heat exchange tube, with a first end and a second end, located inside the first housing and supported by the first board, the first housing is provided with a first feed gas inlet, a first feed gas outlet, a first heat transfer medium inlet which communicates with the first end of the first heat exchange tube, and a first heat transfer medium outlet which communicates with the second end of the first heat exchange tube, the second heat exchanger comprises a second housing, a second board, and a second heat exchange tube, with a first end and a second end, located inside the second housing and supported by the second board, the second housing is provided with a second feed gas inlet which communicates with the first end of the second heat exchange tube, a second feed gas outlet which communicates with the second end of the second heat exchange tube, a second heat transfer medium inlet, and a second heat transfer medium outlet.

Preferably, as the operating pressure of the H2S tail gas of concentration tower is lower than that of the CO2 gas and synthesis gas, the first housing is provided with a plurality of heat transfer medium inlets and a plurality of heat transfer medium outlets, at least one heat transfer medium inlet acting as a CO₂ gas inlet, at least one heat transfer medium inlet acting as a synthesis gas inlet, at least one heat transfer medium outlet acting as a corresponding CO₂ gas outlet, and at least one heat transfer medium outlet acting as synthesis gas outlet. Therefore, the H2S tail gas of concentration tower flows through the housing side of the second heat exchanger, which makes it probable to produce the second housing and the second board of the second heat exchanger with a relatively thin plate, thus reducing the manufacturing cost.

Compared with the prior art, in the present invention, two heat exchangers are used for cooling and the second heat exchanger is designed in such a structure that the feed gas flows through the tube side and the heat transfer medium flows through the housing side. Such improvement in design enables the H2S tail gas of concentration tower with a lower operating pressure to flow through the housing side of the second heat exchanger when the heat exchanger comes into actual use. In such a way, though it's still necessary to shape the first housing into a high-pressure-resistant container with thick walls and use thick boards as the first board, the volume of the first heat exchanger is far smaller than that of the original single heat exchanger and the second housing and the second board of the second heat exchanger may be made with a relatively thin plate, thereby enormously reducing the material and manufacturing cost for the invention. Apart from satisfying the need of production process, the cooler of the present invention has a reasonable and reliable structure also manages to considerably reduce the material and manufacturing cost of the cooler, thus making the product more competitive in the market.

### Brief Description of the Drawings

FIG.1 is a view of a cooler in the prior art.

FIG.2 is a view of a cooler in accordance with an embodiment of the present invention.

### Detailed description of the preferred embodiment

To enable a further understanding of the innovative and technological content of the invention herein, refer to the detailed description of the invention and the accompanying drawings below:

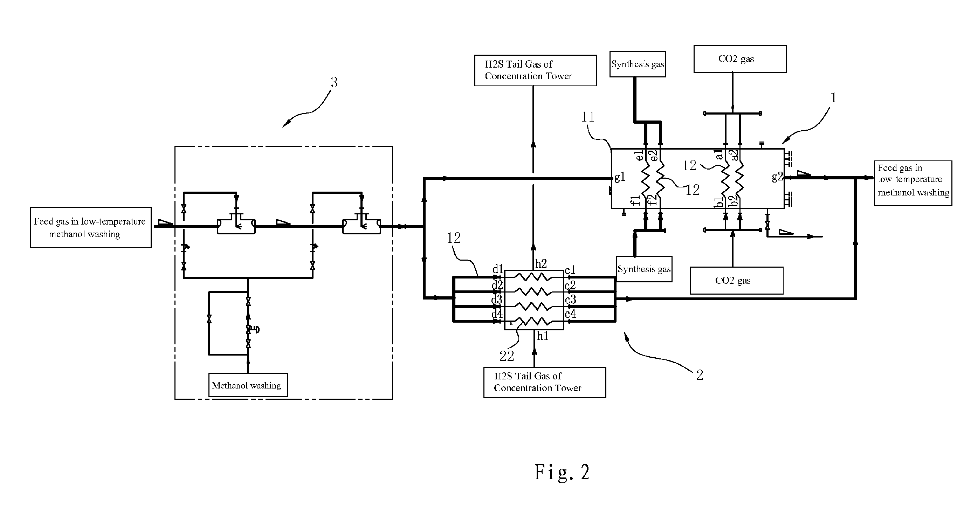

Fig.2 shows a cooler for low-temperature methanol washing gas of a preferred embodiment of the present invention. The cooler comprises a first heat exchanger 1, a second heat exchanger 2 and a methanol washing system 3. Both of the heat exchangers are disposed in a general structure. The first heat exchanger 1 comprises a first housing 11, a first board, and a plurality of first heat exchange tubes 12, with a first end and a second end, located inside the first housing 11 and supported by the first board. The first housing 11 is provided with a first feed gas inlet g1, a first feed gas outlet g2. In this embodiment, the first housing 11 is also provided with a plurality of first heat transfer medium inlets and a plurality of first heat transfer medium outlets, that is, there are two synthesis gas inlets f1, f2, two synthesis gas outlets e1, e2, two CO₂ gas inlets b1, b2 and two CO₂ gas outlets a1, a2. The first heat exchange tubes 12 are divided into two groups, the first ends of the first group of the first heat exchange tubes 12 are respectively connected to the synthesis gas inlets, and the second ends of the first group of the first heat exchange tubes 12 are respectively connected to the synthesis gas outlets; while the first ends of the second group of the first heat exchange tubes 12 are respectively connected to the CO₂ gas inlets, and the second ends of the second group of the first heat exchange tubes 12 are respectively connected to the CO₂ gas outlets, to make the CO₂ gas flow in the one portion of the heat exchange tubes of the first heat exchanger 1.

Similarly, the said second heat exchanger 2 comprises a second housing 21, a second board, and a plurality of second heat exchange tubes 22, with a first end and a second end, located inside the second housing 21 and supported by the second board. The second housing 21 is provided with second feed gas inlets which communicate with the first ends of the second heat exchange tube 22, and second feed gas outlets which communicate with the second ends of the second heat exchange tube 22, the first feed gas inlet g1 communicates with the second feed gas inlets, while the first feed gas outlet communicates with the second feed gas outlets. In this embodiment, the number of the second feed gas inlets is four, there are d1, d2, d3, d4, as show in the Fig.2, correspondingly the number of the second feed gas outlets is also four, there are c1, c2, c3, c4, as show in the Fig.2. The second housing 21 is also provided with a second heat transfer medium inlet h1 and a second heat transfer medium outlet h2, and the heat transfer medium is H2S tail gas of concentration tower, in other words, the H2S tail gas of concentration tower respectively inputs and outputs from the second heat transfer medium inlet h1 and flow out the second heat transfer medium outlet h2.

The methanol washing system 3 of the embodiment, which adopts the prior art, has methanol poured into in order to prevent moisture from freezing in the cooling process.

During the cooling process, the feed gas output form the methanol washing system 3 is divided into two groups, one group comes into the fist heat exchanger 1, that is, one group of the feed gas flows through the first housing 11 of the first exchanger 1, and make heat exchange with the synthesis gas and CO2 gas in the first heat exchange tubes 12 of the first heat exchange 1. While the other group comes into the second exchanger 2, the other group of the feed gas flows through the second housing 21, and makes heat exchange with the H2S tail gas of concentration tower in the second heat exchange tubes 22 of the second heat exchange 2. After the cooling of the first heat exchanger 1 and the second heat exchanger 2, the feed gas will be synthesized together, and turn into the next step. Therefore, the second housing 21 of the second heat exchanger 2 only is required with thin-walled plates whose pressure is designed in 0.3Mpa, and the second board can only use thin board. Comparing with the cooler in prior art, at the same heat-exchange effect, the total cost of the cooler the present invention can be reduced to 30% ∼ 40%, so that the material costs and production costs are significantly reduced.

## Claims

1. A cooler for low-temperature methanol washing gas, **characterized in that** the cooler comprises
- a first heat exchanger (1) comprising a first housing (11), a first board, and a first heat exchange tube (12), with a first end and a second end, located inside the first housing (11) and supported by the first board, the first housing (11) is provided with a first feed gas inlet (g1), a first feed gas outlet (g2), a first heat transfer medium inlet which communicates with the first end of the first heat exchange tube (12), and a first heat transfer medium outlet which communicates with the second end of the first heat exchange tube (12),
- a second heat exchanger (2) comprising a second housing (21), a second board, and a second heat exchange tube (22), with a first end and a second end, located inside the second housing (21) and supported by the second board, the second housing (21) is provided with a second feed gas inlet which communicates with the first end of the second heat exchange tube (22), a second feed gas outlet which communicates with the second end of the second heat exchange tube, a second heat transfer medium inlet, and a second heat transfer medium outlet.

2. The cooler of claim 1, **characterized in that** the first housing (11) is provided with a plurality of heat transfer medium inlets and a plurality of heat transfer medium outlets, at least one heat transfer medium inlet acting as a CO₂ gas inlet, at least one heat transfer medium inlet acting as a synthesis gas inlet, at least one heat transfer medium outlet acting as a corresponding CO₂ gas outlet, and at least one heat transfer medium outlet acting as synthesis gas outlet.
